# EUROPÄISCHE PATENTANMELDUNG

(11) **EP 1 215 001 A1**
(43) Veröffentlichungstag der Anmeldung: **19.06.2002**
(21) Anmeldenummer: 01127206.9
(22) Anmeldetag: 16.11.2001
(51) Int. Cl.: B23B 51/02, B23C 5/10, B28D 1/14

(54) **Bohrer**

(30) Priorität: 15.12.2000 DE 10062797
(71) Anmelder: TOGE-Dübel A. Gerhard KG, 90431 Nürnberg (DE)
(72) Erfinder: Gerhard, Anton, 90427 Nürnberg (DE)
(74) Vertreter: Rau, Albrecht

(57) **Zusammenfassung**

Die Erfindung betrifft einen Bohrer zum Bohren von Hohlziegeln mit einem im wesentlichen zylindrischen, eine Mittel-Längs-Achse (3) aufweisenden Schaft (2) zur Verbindung mit einer Bohrmaschine und einem Fräskopf (5) mit einer parallel zur Mittel-Längs-Achse (3) verlaufenden Bohr-Richtung (6), der mit dem Schaft (2) an dessen in Bohr-Richtung (6) liegendem Schaft-Ende fest verbunden ist, der mindestens eine, sich im wesentlichen über die Länge des Fräskopfes (5) erstreckende Längsnut (8) zur Abführung von Bohrmehl aufweist, der einen Durchmesser aufweist, der sich in Bohr-Richtung (6) über die Länge des Fräskopfes (5) stetig verjüngt und der eine Vielzahl von Fräszähnen (9) aufweist.

## Beschreibung

### Die Erfindung betrifft einen Bohrer zum Bohren von Hohlziegeln

In der letzten Zeit hat die Verwendung vor allem hart gebrannter Tonziegel am Bau stark zugenommen. Es hat sich als schwierig erwiesen, mit herkömmlichen Steinbohrern formgenaue Löcher in diese Ziegel zu bohren, um an den Ziegeln etwas zu befestigen. Normale Steinbohrer bestehen in der Regel aus einem gehärteten Schneideinsatz am vorderen Ende mit einer sehr flachen Spitze. Dahinter schließt sich ein im wesentlichen zylindrischer Bohrerschaft mit ein oder mehreren jeweils entlang einer Schraubenlinie angeordneten Schneidkante an. Die Verwendung dieser Bohrer zum Durchbohren von hart gebrannten Hohlziegeln aus Ton führt dazu, daß zunächst beim Eindringen des Bohrers in den Ziegel das Bohrloch viele kleine Ausbrechungen aufweist und somit nicht das gewünschte Normmaß besitzt. Viel gravierender ist jedoch das Problem, daß auf den Rückseiten der einzelnen durchbohrten Wände des Hohlziegels große Ausbrechungen entstehen, die die Festigkeit des Ziegels im Bereich des Bohrloches stark beeinträchtigen. Aus diesem Grund können die gebohrten Löcher zum Festlegen von Dübeln häufig überhaupt nicht verwendet werden.

Der Erfindung liegt die Aufgabe zugrunde, einen Bohrer zum Bohren von Hohlziegeln zu schaffen, mit dem Hohlziegel möglichst einfach und genau gebohrt werden können.

Die Aufgabe wird durch die Merkmale des Anspruches 1 gelöst. Der Kern der Erfindung besteht darin, als Bohrer einen Fräskopf mit von der Spitze her stetig zunehmendem Durchmesser vorzusehen, der Längsnuten zur Abführung des Bohrmehls und dazwischen eine Vielzahl von Fräszähnen aufweist.

Weitere vorteilhafte Ausgestaltungen der Erfindung ergeben sich aus den Unteransprüchen.

Zusätzliche Merkmale und Einzelheiten der Erfindung ergeben sich aus der Beschreibung zweier Ausführungsbeispiele anhand der Zeichnung. Es zeigen
- Fig. 1: eine Seitenansicht eines Hohlziegel-Bohrers gemäß einer ersten Ausführungsform,
- Fig. 2: eine Querschnittsdarstellung gemäß der Schnittlinie II-II in Fig. 1,
- Fig. 3: eine Frontansicht gemäß dem Sichtpfeil III in Fig. 1,
- Fig. 4: eine Seitenansicht des Bohrers gemäß Fig. 1 in einer etwas verdrehten Lage,
- Fig. 5: eine Querschnittsdarstellung gemäß der Schnittlinie V-V in Fig. 4,
- Fig. 6: eine Querschnittdarstellung entsprechend Fig. 2 einer zweiten Ausführungsform und
- Fig. 7: eine Frontansicht entsprechend Fig. 3 der zweiten Ausführungsform.

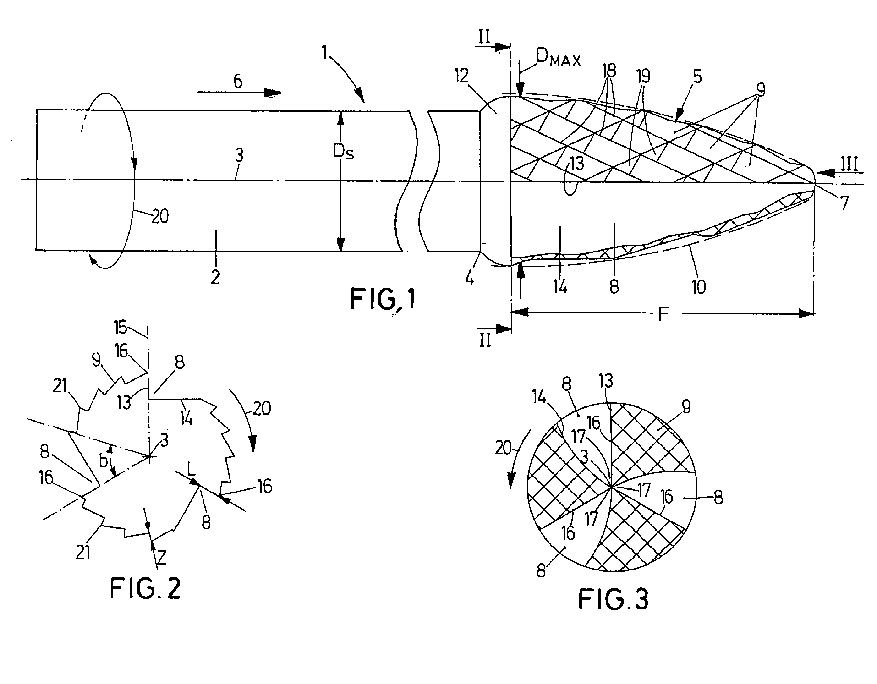

Im folgenden wird unter Bezugnahme auf die Fig. 1 bis 5 eine erste Ausführungsform der Erfindung beschrieben. Ein Hohlziegel-Bohrer 1 weist einen zylindrischen Schaft 2 mit einer Mittel-Längs-Achse 3 auf. Am in Fig. 1 rechts dargestellten Ende 4 des Schaftes 2 ist ein Fräskopf 5 durch Löten befestigt. Der Fräskopf 5 besteht aus Hartmetall. Der Durchmesser des Fräskopfes 5 verjüngt sich von einem maximalen Durchmesser D_{MAX} in Richtung einer parallel zur Mittel-Längs-Achse 3 verlaufenden Bohr-Richtung 6 stetig. Typische maximale Außendurchmesser D_{MAX} liegen bei 10 mm, 12 mm oder 14 mm, wobei selbstverständlich auch beliebige andere Durchmesser möglich sind. Am in Bohr-Richtung 6 liegenden Ende des Fräskopfes 5 weist dieser eine Spitze 7 auf, die abgeflacht sein kann. Der Fräskopf 5 weist drei gleichmäßig über den Umfang verteilte, sich über die Länge des Fräskopfes 5 erstreckende Längsnuten 8 auf. Zwischen den Längsnuten 8 sind über die Länge des Fräskopfes 5 eine Vielzahl von Fräszähnen 9 vorgesehen.

Die Außenform des Fräskopfes 5 wird durch eine Einhüllende 10 bestimmt. Diese weist eine einem Rotationsparaboloid ähnliche Form auf. Der im Bereich der Spitze 7 durch den Fräskopf 5 eingeschlossene Spitzenwinkel a liegt bei kleiner 70° und beträgt ungefähr 40°. Die Einhüllende 10 ist gegenüber einem zwischen der Spitze 7 und dem Bereich des maximalen Durchmessers D_{MAX} einbeschriebenen Kegel 11 konvex, d.h. die Einhüllende 10 steht gegenüber dem Kegel 11 hervor. Entgegen der Bohr-Richtung 6 hinter dem Bereich des maximalen Durchmesser D_{MAX} weist der Fräskopf 5 einen Übergangs-Abschnitt 12 auf, dessen Durchmesser sich entgegen der Bohr-Richtung 6 stetig von dem maximalen Durchmesser D_{MAX} bis zum Durchmesser des Schaftes D_{S} reduziert. Der Durchmesser D_{S} des Schaftes 2 ist kleiner als der maximale Durchmesser D_{MAX} des Fräskopfes 5. Der Übergangs-Abschnitt 12 ist somit derart gestaltet, daß entgegen der Bohr-Richtung 6 nach dem Ende der Fräszähne 9 unmittelbar der Durchmesser der Fräskopfes 5 abnimmt. Für die axiale Länge F des Fräskopfes 5 gilt ungefähr: F/D_{MAX} ≈ 2.

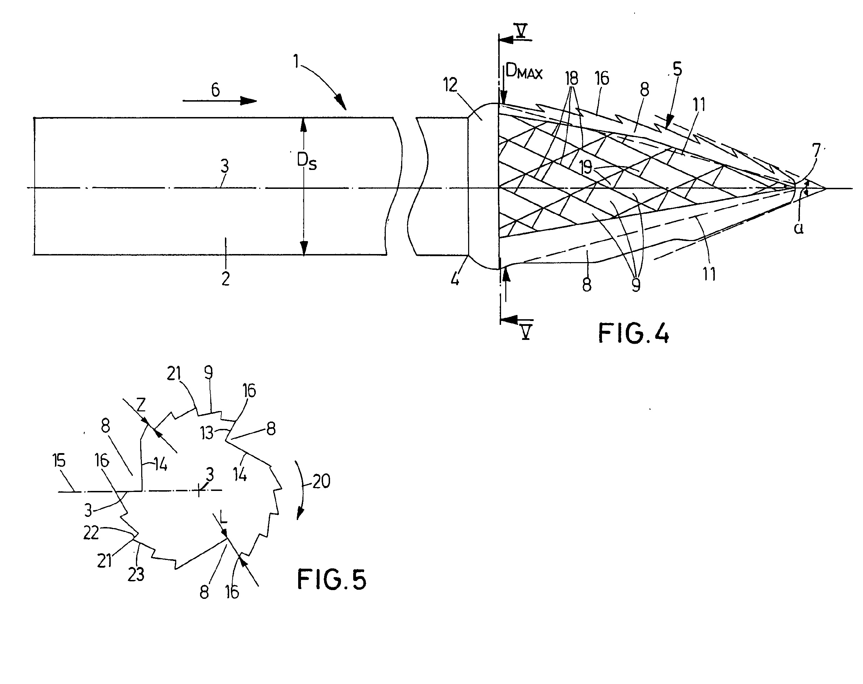

Die Längsnuten 8 sind gleichmäßig über den Umfang verteilt. Die Zahl der Längsnuten 8 kann an sich frei gewählt werden. Wichtig ist jedoch, daß sie eine ausreichende Breite besitzen, um die Funktion der Bohrmehlabführung zu erfüllen. Insbesondere ist die Anordnung von eins bis sechs Längsnuten 8, insbesondere drei Längsnuten 8 möglich. Die Längsnuten 8 weisen zwei im wesentlichen senkrecht aufeinanderstehende Längsnut-Wände 13, 14 auf. Jeweils eine der Längsnut-Wände 13, 14, nämlich die Längsnut-Wand 13, definiert eine Ebene 15, in der auch die Mittel-Längs-Achse 3 liegt. Am äußeren Rand der Längsnut-Wand 13 ist eine Längsnut-Schneidkante 16 vorgesehen. Die Längsnut-Schneidkanten 16 sind aufgrund der benachbart zu diesen angeordneten Fräszähne 9 gezackt ausgebildet. Die Längsnuten 8 weisen im Bereich des maximalen Durchmesser D_{MAX} eine Tiefe L auf, für die gilt: 0,05 ≤ L/D_{MAX} ≤ 0,3, insbesondere 0,1 ≤ L/D_{MAX} ≤ 0,2 und besonders vorteilhaft L/D_{MAX} ≈ 0,15. Die Längsnuten 8 laufen in Richtung auf die Spitze 7 zusammen, wie dies in Fig. 3 dargestellt ist. Die Längsnut-Grunde 17 kommen einander im Bereich der Spitze 7 sehr nahe. Die Breite der Längsnuten 8 ist im Bereich des maximalen Durchmessers D_{MAX} derart gewählt, daß die Längsnuten 8 ungefähr 20 % bis 50 %, insbesondere 35 % des Umfanges einnehmen. Für die Längsnuten 8 gemäß den Fig. 2 und 5 bedeutet dies, daß die Längsnut 8 bezogen auf die Mittel-Längs-Achse 3 einen Winkel b einschließt, für den ungefähr gilt: b ≈ 40°. Es ist auch möglich, Längsnuten 8 vorzusehen, die sich von der Spitze 7 nur über einen Teil der Länge F des Fräskopfes 5 erstrecken, insbesondere 20 %, 30 %, 50 % oder 75 %. Auch die Längsnuten 8 dieser Länge genügen, um das Bohrmehl abzuführen. Der Vorteil einer sich nicht über die ganze Länge erstreckenden Längsnut 8 besteht darin, daß in dem Bereich hinter der Längsnut 8, d.h. entgegen der Richtung 6, weitere Fräszähne 9 vorgesehen sind, so daß die Fräseigenschaften des Bohrers 1 insgesamt besser sind und dadurch der Bohrer 1 eine längere Haltbarkeit besitzt. Im allgemeinen gilt, daß die Vibration beim Bohrvorgang den Raum zwischen den einzelnen Fräszähnen 9 vom Bohrmehl reinigt.

Die zwischen den Längsnuten 8 angeordneten Fräszähne 9 weisen Fräszahn-Schneidkanten 21 auf. Diese sind entlang Schneidkanten-Linien 18 hintereinander angeordnet. Die Linien 18 liegen, wie in den Fig. 1 und 4 dargestellt ist, auf zueinander versetzten Schraubenlinien. Es ist auch möglich, die Linien 18 auf Mantellinien des Fräskopfes 5 anzuordnen, d.h. die Linie 18 und die Mittel-Längs-Achse 3 liegen in einer gemeinsamen Ebene. Die Fräszähne 9 weisen entlang der Linien 18 Unterteilungen 19 auf, so daß benachbarte Fräszähne 9 entlang einer Linie 18 nicht direkt miteinander verbunden sind. Die Fräszähne 9 weisen in Dreh-Richtung 20 vorne die Fräszahn-Schneidkanten 21 auf. Jeder Fräszahn 9 wird in Bezug auf die Kante 21 durch eine voreilende, steil abfallende Flanke 22 sowie eine nacheilende, flach abfallende Flanke 23 begrenzt. Die Fräszähne 9 weisen eine Höhe Z auf, für die im Bereich des maximalen Durchmessers D_{MAX} gilt: 0,02 ≤ Z/D_{MAX} ≤ 0,1 und insbesondere Z/D_{MAX} ≈ 0,05. Es ist möglich, im Schaft 2 eine schraubenlinienförmige Längsnut vorzusehen, um die Abführung des Bohrmehls zu vereinfachen.

Im folgenden wird die Funktion des Hohlziegel-Bohrers 1 beschrieben. Beim Aufsetzen des rotierenden Bohrers 1 auf einen Ziegel beginnen sofort die in Bohr-Richtung 6 liegenden Enden der Längsnut-Schneidkanten 16 sich in den Ziegel zu schneiden bzw. zu schaben. Durch die Längsnut-Schneidkanten 16 und die zahlreichen Fräszahn-Schneidkanten 21 wird nun Material des Ziegels im Bereich der Bohrlochwand sukzessiv abgetragen. Von zentraler Bedeutung ist hierbei, daß der Schnitt der Schneidkanten 16 und 21 mehrfach unterbrochen ist, was durch die gezackte Ausbildung der Schneidkante 16 sowie durch die Unterteilungen 19 bewirkt wird. Hierdurch wird das Material der Bohrlochwand in sehr viel kleineren Einzelportionen ausgefräst und anschließend durch die Längsnuten 8 abgeführt, wodurch auch bei sehr hart gebrannten Ziegeln eine perfekte glatte Bohrlochwand entsteht. Von besonderer Bedeutung ist, daß die in einem Hohlziegel in Bohr-Richtung 6 liegenden Rückwände der durchbohrten Wände des Hohlziegels unversehrt bleiben und beim Durchdringen des Bohrers durch die Wand nicht nach hinten ausgebrochen werden. Dies liegt zum einen an der gegenüber Steinbohrern vergleichsweise spitzen Ausgestaltung des Fräskopfes 5. Darüber hinaus nimmt der Durchmesser des Fräskopfes 5 von der Spitze 7 her kontinuierlich zu, so daß der Fräskopf 5 innerhalb eines Bohrloches über einen wesentlichen Teil seiner Länge gegenüber der Wand abgestützt ist. Kurz bevor der Fräskopf 5 eine Wand eines Hohlziegel durchdringt, wird, anders als bei herkömmlichen Steinbohrern mit einem im wesentlichen zylindrischen Bohrschaft, ein wesentlicher Teil der von der Bedienperson der Bohrmaschine entlang der Bohr-Richtung 6 ausgeübten Kraft nicht im Bereich des Ziegelmaterials an der Spitze 7, sondern wird über die gesamte Länge des Bohrloches von der Bohrlochwand aufgenommen. Hierdurch wird sichergestellt, daß die Rückseite der zu durchbohrenden Wand gleichmäßig durchbohrt und nicht ausgebrochen wird. Dies hat den Vorteil, daß Bohrlöcher sehr viel präziser gesetzt werden und Dübel leichter und in vielen Fällen erst überhaupt gebohrt werden können, da das Bohrloch im Innenbereich des Ziegels nicht aufgebrochen ist. Von zentraler Bedeutung ist ebenfalls, daß der Durchmesser des Übergangs-Abschnittes 12 entgegen der Bohr-Richtung 6 nach dem Ende der Fräszähne 9 abnimmt. Auf diese Weise wird sichergestellt, daß beim Durchbohren einzelner Wände eines Hohlziegels keine Verklemmungen zwischen dem Übergangs-Abschnitt 12 oder dem Schaft 2 einerseits und der Bohrlochwand andererseits entstehen und insofern ein Ausbrechen der einzelnen Rückwände verhindert wird.

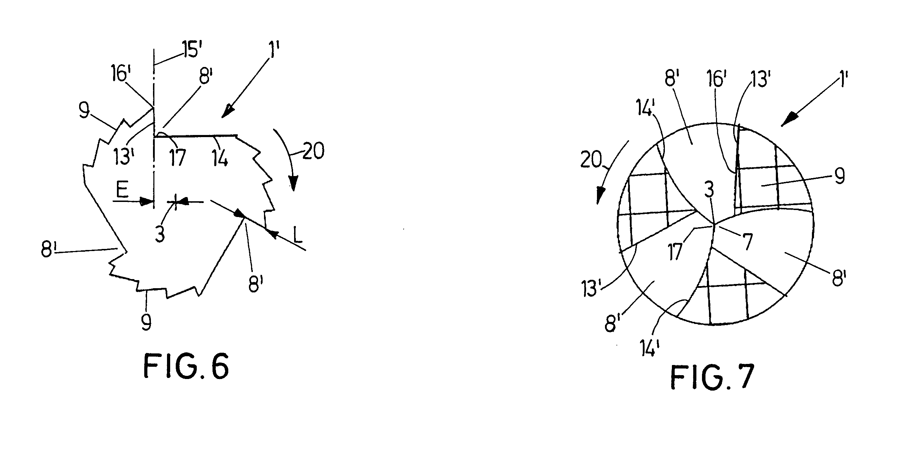

Im folgenden wird unter Bezugnahme auf die Fig. 6 und 7 eine zweite Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem hochgesetzten Strich. Der zentrale Unterschied gegenüber der ersten Ausführungsform besteht darin, daß die Längsnuten 8' exzentrisch angeordnet sind. Dies bedeutet, daß die Ebene 15', in der die Längsnut-Wand 13' liegt, nicht derart angeordnet ist, daß die Mittel-Längs-Achse 3 in der Ebene 15' liegt. Vielmehr hat die Ebene 15' einen Abstand E von der Mittel-Längs-Achse 3. Für das Verhältnis des Abstandes E zum maximalen Durchmesser D_{MAX} gilt: 0,05 ≤ E/D_{MAX} ≤ 0,3 und besonders vorteilhaft E/D_{MAX} ≈ 0,1. Dies führt im Bereich der Spitze 7, wie dies in Fig. 7 dargestellt ist, dazu, daß die einzelnen Längsnuten 8' nicht entlang der Mittel-Längs-Achse 3, sondern entlang eines größeren Bereiches aneinander angrenzen. Dies verbessert insbesondere das Verhalten des Bohrers 1' zu Beginn einer Bohrung. Durch die Anordnung der Längsnuten 8' ist beim Bohren ein geringerer Druck erforderlich, so daß sich der Bohrer 1' weniger erwärmt und er dadurch länger hält. Das außermittige Schneiden im Bereich der Spitze 7 ist somit von großer Bedeutung.

## Patentansprüche

1. Bohrer zum Bohren von Hohlziegeln mit
a) einem im wesentlichen zylindrischen, eine Mittel-Längs-Achse (3) aufweisenden Schaft (2) zur Verbindung mit einer Bohrmaschine und
b) einem Fräskopf (5) mit einer parallel zur Mittel-Längs-Achse (3) verlaufenden Bohr-Richtung (6),
i) der mit dem Schaft (2) an dessen in Bohr-Richtung (6) liegendem Schaft-Ende (4) fest verbunden ist,
ii) der mindestens eine, sich über zumindest einen Teil der Länge des Fräskopfes (5) erstreckende Längsnut (8; 8') zur Abführung von Bohrmehl aufweist,
iii) der einen Durchmesser aufweist, der sich in Bohr-Richtung (6) über die Länge des Fräskopfes (5) stetig verjüngt und
iv) der eine Vielzahl von Fräszähnen (9) aufweist.

2. Bohrer gemäß Anspruch 1, **dadurch gekennzeichnet, daß** jeder Fräszahn (9) eine Fräszahn-Schneidkante (21) aufweist.

3. Bohrer gemäß Anspruch 2, **dadurch gekennzeichnet, daß** die Fräszahn-Schneidkanten (21) entlang von Schneidkanten-Linien (18) angeordnet sind.

4. Bohrer gemäß Anspruch 3, **dadurch gekennzeichnet, daß** die Fräszahn-Schneidkanten (21) entlang der Schneidkanten-Linien (18) unterteilt sind.

5. Bohrer gemäß Anspruch 3 oder 4, **dadurch gekennzeichnet, daß** die Schneidkanten-Linien (18) auf Schraubenlinien angeordnet sind.

6. Bohrer gemäß Anspruch 3 oder 4, **dadurch gekennzeichnet, daß** die Schneidkanten-Linien (18) auf Mantellinien des Fräskopfes (5) verlaufen.

7. Bohrer gemäß einem der vorangehenden Ansprüche, **dadurch gekennzeichnet, daß** mehrere über den Umfang des Fräskopfes (5) verteilte Längsnuten (8; 8'), insbesondere drei Längsnuten (8; 8') vorgesehen sind.

8. Bohrer gemäß einem der vorangehenden Ansprüche, **dadurch gekennzeichnet, daß** die mindestens eine Längsnut (8) eine Längsnut-Wand (13) mit einer Längsnut-Schneidkante (16) aufweist, wobei die Mittel-Längs-Achse (3) in der durch die Längsnut-Wand (13) bestimmten Ebene (15) liegt.

9. Bohrer gemäß einem der vorangehenden Ansprüche, **dadurch gekennzeichnet, daß** der Fräskopf (5) im Bereich seines entgegen der Bohr-Richtung (6) liegenden Endes einen maximalen Außendurchmesser D_{MAX} aufweist.

10. Bohrer gemäß Anspruch 9, **dadurch gekennzeichnet, daß** die mindestens eine Längsnut (8; 8') eine Tiefe L aufweist, für die gilt: 0,05 ≤ L/D_{MAX} ≤ 0,3, insbesondere 0,1 ≤ L/D_{MAX} ≤ 0,2 und besonders vorteilhaft L/D_{MAX} ≈ 0,15.

11. Bohrer gemäß Anspruch 9, **dadurch gekennzeichnet, daß** die mindestens eine Längsnut (8; 8') im Bereich des maximalen Umfanges D_{MAX} ungefähr 20 % bis 50 %, insbesondere 35 % des Umfanges einnimmt.

12. Bohrer gemäß Anspruch 9, **dadurch gekennzeichnet, daß** die Fräszähne (9) im Bereich des maximalen Durchmessers D_{MAX} eine Höhe Z aufweisen für die gilt: 0,02 ≤ Z/D_{MAX} ≤ 0,1, insbesondere Z/D_{MAX} ≈ 0,05.

13. Bohrer gemäß einem der vorangehenden Ansprüche, **dadurch gekennzeichnet, daß** der Fräskopf (5) eine Einhüllende (10) aufweist, die im wesentlichen die Form eines Rotationsparaboloids aufweist.

14. Bohrer gemäß Anspruch 1, **dadurch gekennzeichnet, daß** die mindestens eine Längsnut (8') eine Längsnut-Wand (13') mit einer Längsnut-Schneidkante (16') aufweist, wobei die Mittel-Längs-Achse (3) einen Abstand E von der durch die Längsnut-Wand (13') bestimmten Ebene (15') aufweist.
